# EUROPEAN PATENT APPLICATION

(11) **EP 4 661 173 A1**
(43) Date of publication of application: **10.12.2025**
(21) Application number: 25158059.3
(22) Date of filing: 14.02.2025
(51) Int. Cl.: H01M 50/202, C09J 7/40, H01M 50/231, H01M 50/247, H04M 1/02

(54) **BATTERY TAPE AND BATTERY HAVING BATTERY TAPE ATTACHED THERETO**

(30) Priority: 04.06.2024 KR 20240073355
(71) Applicant: SAMSUNG SDI CO., LTD., Yongin-si, Gyeonggi-do 17084 (KR)
(72) Inventor: KOH, Seok, Yongin-si, Gyeonggi-do 17084 (KR)
(74) Representative: Marks & Clerk LLP

(57) **Abstract**

A battery tape includes: a first adhesive member configured to be attached to at least a portion of a first surface of a battery; and a second adhesive member extending from a side portion of the first adhesive member and configured to be attached to at least another portion of the battery. The first adhesive member has a 1_1th subregion and a 1_2th subregion having a lower adhesive force than the 1_1th subregion, and the 1_2th subregion is positioned in a region in contact with the second adhesive member.

## Description

### BACKGROUND

### 1. Field

Aspects of embodiments of the present disclosure relate to a battery tape and a battery having the battery tape attached thereto.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

When a battery is mounted on a small portable electronic device or the like, a battery tape attached to the battery may also be mounted on the electronic device. The battery tape should prevent the battery from moving within the electronic device and help prevent the battery from being disconnected even if the electronic device is dropped. However, a battery tape should also be easily detachable from the electronic device.

The above information disclosed in this Background section is for enhancement of understanding of the background of the present disclosure, and therefore, it may contain information that does not constitute related (or prior) art.

### SUMMARY

Embodiments of the present disclosure provide a battery tape that can prevent the battery from moving within an electronic device to which it is mounted while also being easily removable and a battery having the battery tape attached thereto.

These and other aspects and features of the present disclosure will be described in or will be apparent from the following description of embodiments of the present disclosure.

According to an embodiment of the present disclosure, a battery tape includes: a first adhesive member configured to be attached to at least a portion of a first surface of a battery; and a second adhesive member extending from a side portion of the first adhesive member and configured to be attached to at least a portion of (or another portion of) the battery. The first adhesive member has: a 1_1th subregion and a 1_2th subregion having a lower adhesive force than the 1_1th subregion, and the 1_2th subregion is positioned in a region in contact with the second adhesive member.

In an embodiment, the 1_2th subregion may be not adhesive.

In an embodiment, the second adhesive member may have a 2_1th subregion, and the 2_1th subregion may be positioned in a region in contact with the first adhesive member and extending in a first direction.

In an embodiment, the 2_1th subregion may have a shorter length than the first adhesive member in the first direction.

In an embodiment, the 1_2th subregion may have a shorter length than the 2_1th subregion in the first direction.

In an embodiment, a center of the 1_2th subregion may coincide with a center of the 2_1th subregion in the first direction.

In an embodiment, the 2_1th subregion may have a width in a second direction perpendicular to the first direction, and the 1_2th subregion may have a smaller width than the 2_1th subregion.

In an embodiment, the 2_1th subregion may have a higher adhesive force than the 1_1th subregion.

In an embodiment, the first adhesive member may have a non-adhesive 1_3th subregion positioned at a corner of the first adhesive member.

In an embodiment, the first adhesive member may have a plurality of corners, and the 1_3th subregion may have a plurality of 1_3th subregions positioned at the corners, respectively.

In an embodiment, the 1_3th subregion may be "L" shaped.

In an embodiment, the second adhesive member may have a 2_2th subregion, and the 2_2th subregion may be attachable to at least one of a second surface of the battery opposite the first surface of the battery or a side surface of the battery.

In an embodiment, the second adhesive member may have a pull portion extending in a second direction.

In an embodiment, at least a portion of the pull portion may be adhesive, and the pull portion may be configured to be attached to at least one of a second surface of the battery opposite the first surface of the battery or a side surface of the battery.

In an embodiment, the pull portion may have a 2_3th subregion on a portion thereof from which adhesive force may be removed.

In an embodiment, a battery having the battery tape attached thereto may be coupled to a battery receptacle, and the pull portion may be configured to allow the battery to be attached to and detached from the battery receptacle.

In an embodiment, the second adhesive member may have a folding portion extending in a first direction, and the folding portion may allow the pull portion to be folded with respect to a side surface of the battery.

In an embodiment, a release force between the first adhesive member and the battery may decrease proportionally to the size of the 1_2th subregion.

In an embodiment, the first adhesive member may be wider than the area of the first surface of the battery.

A battery may include the battery tape according to one or more of the above-described embodiments.

An electronic device may include the battery according to one or more of the above-described embodiments.

According to embodiments of the present disclosure, the pull portion allows the battery having a battery tape attached thereto to be removed from the battery receptacle.

According to embodiments of the present disclosure, the magnitude of a release force may be greater than or equal to a reference (or predetermined) magnitude, and an increase in the release force between the first adhesive member and the battery may be improved.

According to embodiments of the present disclosure, a suitable strength of the release force may be provided between the first adhesive member and the battery by adjusting the length of the 1_2th subregion.

However, aspects and features of the present disclosure are not limited to those described above, and other aspects and features not mentioned will be clearly understood by a person skilled in the art from the detailed description, described below.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a plan view of a battery tape according to embodiments of the present disclosure;
FIG. 2 is a plan view of a battery having a portion of the battery tape attached thereto according to embodiments of the present disclosure;
FIG. 3 is a perspective view of a battery to which a battery tape according to embodiments of the present disclosure is attached;
FIG. 4 is a side view of a battery coupled to a battery receptacle according to embodiments of the present disclosure;
FIG. 5 is a plan view of a comparative battery tape and a plan view of a battery having a portion of the comparative battery tape attached thereto;
FIG. 6 is a graph illustrating test results on the release force of the comparative battery tape;
FIG. 7 is a plan view of a battery tape according to an embodiment of the present disclosure;
FIG. 8 is a plan view of a battery tape according to another embodiment of the present disclosure;
FIG. 9 is a plan view of a battery tape according to another embodiment of the present disclosure;
FIG. 10 is a graph illustrating the release forces of the battery tapes shown in FIGS. 7 to 9; and
FIG. 11 is a flowchart describing a battery tape attachment method according to embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

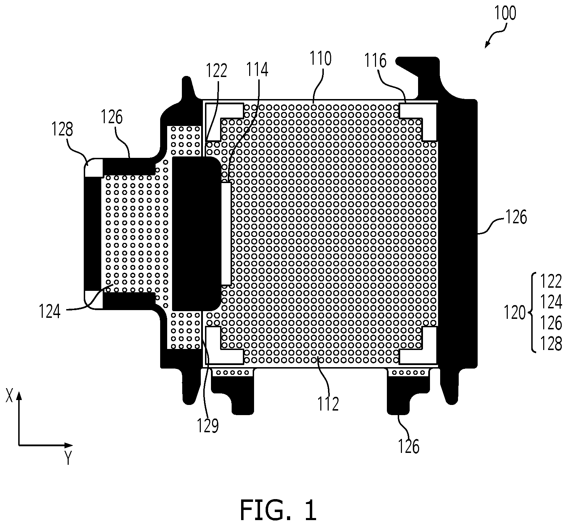

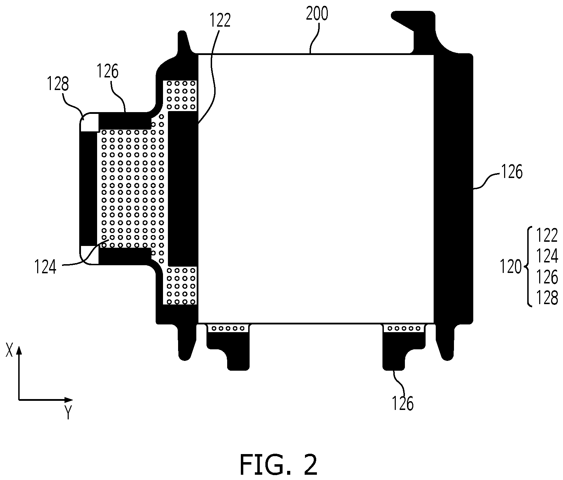

FIG. 1 is a plan view of a battery tape 100 according to embodiments of the present disclosure. FIG. 2 is a plan view of a battery 200 having a portion of the battery tape 100 attached thereto according to embodiments of the present disclosure. The battery 200 may provide power to one or more components of an electronic device. For example, the battery 200 may include a non-rechargeable primary cell, a rechargeable secondary cell, a fuel cell, or the like. In an embodiment, the battery 200 may be integrally disposed (or integrally arranged) within the electronic device. In another example, the battery 200 may be removably disposed (or removable mounted) to be attachable to and detachable from the electronic device in case the battery 200 needs to be replaced. An electronic device including the battery 200 may include a battery receptacle for receiving the battery 200.

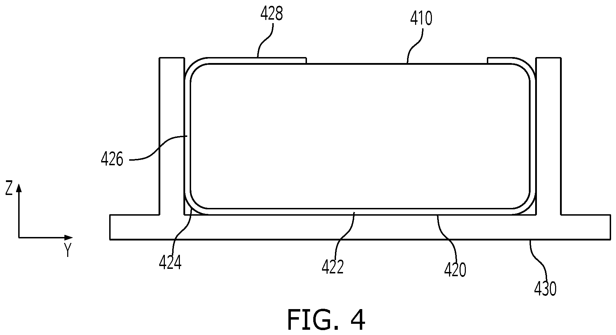

The battery tape 100 may include a first adhesive member 110 and a second adhesive member 120. The first adhesive member 110 may be attached to at least a portion of a first surface of the battery. In such an embodiment, the first surface of the battery 200 may be, but is not limited to, the bottom surface of the battery 200. The battery 200 and the battery receptacle may be coupled to each other in a case where the bottom surface of the battery 200 faces the battery receptacle. The coupling relationship between the battery 200 and the battery receptacle will be described in more detail with reference to FIG. 4.

The second adhesive member 120 may extend from a side portion of the first adhesive member 110 and may be attached to at least a portion of the battery 200 (e.g. another portion). For example, the second adhesive member 120 may be attached to at least one of a second surface of the battery 200 opposite the first surface of the battery 200 or a side surface of the battery 200. The attachment of the second adhesive member 120 to at least a portion of the battery 200 may further strengthen the bond between the battery tape 100 and the battery 200.

The first adhesive member 110 may include a 1_1th subregion 112. The 1_1th subregion 112 may be attached to at least a portion of the first surface of the battery. The 1_1th subregion 112 may be adhesive.

Referring to FIG. 1, the 1_1th subregion 112 may have the same (e.g., may have a consistent) adhesive force per unit area. For the 1_1th subregion 112 to be adhesive, an adhesive may be applied to the 1_1th subregion 112. The adhesive may be applied in the form of dots at regular intervals on the 1_1th subregion 112. As the size of the dots increases, the adhesive force per unit area of the subregion may increase. In addition, the adhesive force per unit area of the subregion may increase as the spacing between the dots becomes smaller. However, the adhesive force per unit area is not determined only by the size and spacing of the dots. For example, the adhesive force per unit area may also be determined by the material, thickness, etc. of the adhesive.

The first adhesive member 110 may include a 1_2th subregion 114. The 1_2th subregion 114 may be positioned in a region in contact with the second adhesive member 120.

The 1_2th subregion 114 may have a lower adhesive force than the 1_1th subregion 112. Herein, a non-adhesive region that lacks adhesive force may be described as being less adhesive than a region that has adhesive force. For example, the 1_2th subregion 114 may not have an adhesive force and, thus, has a lower adhesive force than the 1_1th subregion 112. As a result, when the first adhesive member 110 is attached to the battery 200, the bond between the region of the battery 200 corresponding to the 1_2th subregion 114 and the first adhesive member 110 may be relatively weak.

In an embodiment, the first adhesive member 110 may include 1_3th subregions 116. The 1_3th subregions 116 may be positioned at corners of the first adhesive member 110. The 1_3th subregions 116 may be non-adhesive regions. As a result, when the first adhesive member 110 is attached to the battery 200, the bond between the regions of the battery 200 corresponding to the 1_3th subregions 116 and the first adhesive member 110 may be relatively weak. The weakened bond in this region may improve a joint structure of the battery 200 and the battery tape 100.

The 1_3th subregions 116 may have various shapes. For example, the 1_3th subregions 116 may be "L" shaped. In such an embodiment, the "L" shaped corners of the 1_3th subregions 116 may correspond to the corners of the first adhesive member 110. In another embodiment, the 1_3th subregions 116 may have a rectangular shape. In another embodiment, the 1_3th subregions 116 may have a triangular shape. For example, the 1_3th subregions 116 may have a right triangular shape. The 1_3th subregions 116 may be positioned such that the right angled portions of the right triangular shapes correspond to the corners of the first adhesive member 110. Referring to FIG. 1, the 1_3th subregions 116 of the first adhesive member 110 are shown as being symmetrical about the X-axis and/or the Y-axis with respect to the center of the first adhesive member 110, but in other embodiments, the 1_3th subregions 116 of the first adhesive member 110 may be asymmetrical. In addition, in an embodiment in which the 1_3th subregions 116 exist as separate regions (e.g., are spaced apart from each other), the respective regions may have different shapes from some or each of one another. The shape of the 1_3th subregions 116 is not limited to the above description, but the 1_3th subregions 116 may have various shapes.

In an embodiment, the first adhesive member 110 may have a plurality of corners. In addition, the first adhesive member 110 may include a plurality of 1_3th subregions 116. The 1_3th subregions 116 may be positioned at the corners of the first adhesive member 110, respectively.

In an embodiment, the second adhesive member 120 may include a 2_1th subregion 122. The 2_1th subregion 122 may be positioned in a region in contact with the first adhesive member 110. In addition, the 2_1th subregion 122 may extend in the first direction. For example, the 2_1th subregion 122 may have a length in the first direction and a width in a second direction.

In an embodiment, the first direction may be a horizontal or vertical direction of the battery tape 100. The second direction may be perpendicular to the first direction. For example, in an embodiment in which the battery tape 100 has a rectangular shape, the first direction may be a longitudinal direction of the battery tape 100 and the second direction may be a transverse direction of the battery tape 100. Referring to FIG. 1, the first direction may be the X-axis direction, and the second direction may be the Y-axis direction.

In an embodiment, the length of the 2_1th subregion 122 may be shorter than the length of the first adhesive member 110 in the first direction.

In an embodiment, the 1_2th subregion 114 may be positioned in a region in contact with the 2_1th subregion 122. As a result, in an embodiment in which the battery tape 100 is detached from the battery 200, attaching or detaching the first adhesive member 110 may be facilitated after the 2_1th subregion 122 and the battery 200 are detached.

In an embodiment, the center of the 1_2th subregion 114 may coincide with the center of the 2_1th subregion 122 in the first direction. In an embodiment, the width of the 1_2th subregion 114 may be shorter than the width of the 2_1th subregion in the second direction. In an embodiment, the length of the 1_2th subregion 114 may be shorter than the length of the 2_1th subregion 122 in the first direction.

In an embodiment, the 2_1th subregion 122 may have a higher adhesive force than the adhesive force of the 1_1st subregion 112. In addition, the 2_1th subregion 122 may have a greater adhesive force per unit area than other regions within the second adhesive member 120. As a result, the degree of bonding of the 2_1th subregion 122 to at least one of the side surfaces or the second surface of the battery 200 may be stronger than the degree of bonding of the first adhesive member 110 to at least a portion of the first surface of the battery 200. Referring to FIG. 1, the regions with black backgrounds are regions to which the adhesive is continuously applied and, therefore, may have a higher adhesive force per unit area than the regions with dotted shapes.

In an embodiment, the second adhesive member 120 may include a plurality of 2_2th subregions 126. The adhesive force of the 2_2th subregions 126 may be the same as or similar to the adhesive force of the 2_1th subregion 122.

In an embodiment, the 2_2th subregions 126 may be attached to the second surface of the battery or to at least one of the side surfaces of the battery. For example, side surfaces of the battery 200 may be connected to the first surface and the second surface of the battery 200. The first surface of the battery 200 may correspond to the bottom surface of the battery 200, and the second surface of the battery 200 may correspond to the top surface of the battery 200. In an embodiment in which the battery 200 is a hexahedron, the side surfaces of the battery 200 may include a third surface, a fourth surface, a fifth surface, and a sixth surface connected to (e.g., extending from) the first and second surfaces. The third surface may be opposite the fifth surface, and the fourth surface may be opposite the sixth surface. One of the 2_2th subregions 126 may be attached to at least one of the second surface or the third surface. Another of the 2_2th subregions may be attached to at least one of the fifth surface opposite the third surface or the second surface. Another of the 2_2th subregions may be attached to at least one of the fourth surface, the sixth surface, or the top surface.

In an embodiment, the second adhesive member 120 may include a pull portion 124, which is a portion of the second adhesive member 120 extending in the second direction. At least a portion of the pull portion 124 may be adhesive. The portion of the pull portion 124 having adhesive force may be attached to at least one of the second surface or the side surfaces of the battery 200.

In an embodiment, the pull portion 124 may include one or more of the 2_2th subregions 126. For example, the 2_2th subregions 126 may be provided on peripheral portions of the pull portion 124. The 2_2th subregions 126 may be provided on one or both sides of the pull portion 124 in the first direction and on one side in the second direction. Because the at least one 2_2th subregion 126 is attached to at least one of the second surface or the side surface of the battery 200, the pull portion 124 may also be attached to the battery 200. A portion of the remaining region of the pull portion 124 other than the 2_2th subregions 126 may also be adhesive. The adhesive force of the portion of the remaining region of the pull portion 124 other than the 2_2th subregions 126 may be the same as or lower than the adhesive force of the 1_1th subregion 112.

In an embodiment, the pull portion 124 may include 2_3th subregions 128 provided on portions of the pull portion 124 from which adhesive force is removed. For example, the 2_3th subregions 128 may be positioned at corners of the pull portion 124. The pull portion 124 may be detached from the battery 200 using the 2_3th subregions 128 from which adhesive force is removed.

In an embodiment, the second adhesive member 120 may include a tear line. For example, the tear line may be provided around the 2_1th subregion 122. Because the adhesive force of the 2_1th subregion 122 is greater than the adhesive force of the 1_1th subregion 112, the battery tape 100 may be more strongly bonded to the 2_1th subregion 122 than to the 1_1th subregion 112. In an embodiment in which the battery tape 100 is pulled by using the pull portion 124, the battery tape 100 may be divided along the tear line into a portion including the 1_1th subregion 112 and a portion including the 2_1th subregion 122.

In an embodiment, the second adhesive member 120 may include folding portions 129 extending in the first direction. The folding portions 129 may allow the second adhesive member 120 to be folded with respect to edges of the battery 200. As a result, the second adhesive member 120 including the pull portion 124 and the 2_2th subregion 126 may be attached to at least one of the side surfaces or the second surface of the battery.

Referring to FIG. 2, in an embodiment in which the battery tape 100 is to be attached to the battery 200, the battery 200 may be positioned over the battery tape 100 such that the first surface of the battery 200 faces the first adhesive member 110. The area of the first adhesive member 110 may be larger than the area of the first surface of the battery 200. Thereafter, the second adhesive member 120 may be folded toward the side surface of the battery 200 using the folds (or folding portions) 129. The adhesive regions included in the second adhesive member 120 (e.g., at least a portion of the 2_1th subregion 122, the 2_2th subregion 126, and the pull portion 124) may be attached to at least one of the side surfaces or the second surface of the battery 200.

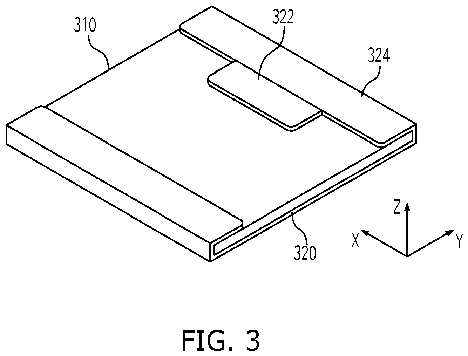

A structure in which the battery tape 100 is coupled to the battery 200 is described in more detail with reference to FIG. 3.

The 1_3th subregions 116 may reduce noise generated by the bonding and/or attachment/detachment of the battery 200 to and/or from the first adhesive member 110 (e.g. reduced creasing). The connection between the battery 200 and the first adhesive member 110 may be improved. In addition, the weakening of the bond between the battery 200 and the first adhesive member 110 by the 1_3th subregions 116 may be compensated for by the second adhesive member 120.

FIG. 3 is a perspective view of a battery 310 to which a battery tape 320 according to embodiments of the present disclosure is attached. As described above with reference to FIGS. 1 and 2, the battery tape 320 may be attached to the battery 310 such that a first surface of the battery 310 faces a first adhesive member of the battery tape 320. Thereafter, the second adhesive member 322 may be folded with respect to the side surfaces of the battery 310 by using the folding portions 129 and may be attached to at least one of the side surfaces or the second surface of the battery 310 by the adhesive regions included in the second adhesive member 322. Some configurations of the second adhesive member 322 are omitted from the illustration of FIG. 3, and the present disclosure is not intended to be limited thereto.

Referring to FIG. 3, the battery tape 320 is shown as being directly attached to surfaces of the battery 310, but the present disclosure is not limited thereto. For example, the battery 310 may have an insulating member, an insulating tape, a protective film, an imprint indicating information about the battery 310, or the like attached/bonded to at least a portion of the surfaces thereof. The battery tape 320 may be attached to the battery 310 in a state in which other configurations are attached/bonded to the surfaces of the battery 310.

The battery 310 having the battery tape 320 attached thereto may be coupled to a battery receptacle. The battery 310 may be coupled to the battery receptacle such that the first surface of the battery 310 having the first adhesive member attached thereto faces the battery receptacle. A structure in which the battery 310 having the battery tape 320 attached thereto is coupled to the battery receptacle is described in more detail with reference to FIG. 4.

FIG. 4 is a side view of a battery 410 coupled to a battery receptacle 430 according to embodiments of the present disclosure. Referring to FIG. 4, the battery receptacle 430 may have a space for receiving (or accommodating) the battery 410 with a battery tape 420 attached thereto. For example, the battery receptacle 430 may be a space for receiving the battery 410 configured to power an electronic device.

A first adhesive member 422 of the battery tape 420 may be attached to a first surface of the battery 410. A folding portion 424 may allow the second adhesive member 426 to be folded with respect to a side surface of the battery 410. As a result, the second adhesive member 426 may be attached to at least a portion of the side surface or a second surface of the battery 410. Similarly, a pull portion 428 may be attached to at least a portion of the side surface or the second surface of the battery 410. Referring to FIG. 4, the pull portion 428 is shown as being attached to the second surface of the battery, but the present disclosure is not limited thereto.

The battery tape 420 may include a first surface on which the first adhesive member 422 is provided and a second surface attached to the second surface of the battery 410 opposite the first surface of the battery 410. The battery tape 420 may be attached to the battery 410 such that the first surface thereof faces the battery 410. The battery 410 may be received in the battery receptacle 430 such that the second surface of the battery tape 420 faces the bottom of the battery receptacle 430.

In addition, a bonding tape may be provided between the second surface of the battery tape 420 and the bottom of the battery receptacle 430. The bonding tape may have adhesive force on opposite surfaces, thereby assisting in bonding the battery 410 having the battery tape 420 attached thereto and the battery receptacle 430.

The battery 410 coupled to the battery receptacle 430 may be decoupled from the battery receptacle 430 by using the battery tape 420. For example, the pull portion 428 of the battery tape 420 may be detached from the battery 410. For example, the 2_3th subregion included in the pull portion 428 may not be attached to the battery 410. The pull portion 428 may be detached from the battery 410 by using the 2_3th subregion. The pull portion 428 may be pulled in a third direction or in a direction between the second direction and the third direction. The third direction may be perpendicular to the first direction and the second direction. In FIG. 4, the third direction may refer to the Z direction. In addition, the third direction may be a direction in which an open area of the battery receptacle 430 is provided. In response to pulling the pull portion 428, the battery tape 420 attached to the battery 410 may be lifted. The battery 410 coupled to the battery tape 420 may also be lifted, thereby decoupling the battery 410 from the battery receptacle 430. The battery 410 having the battery tape 420 attached thereto may be detached from the battery receptacle 430 by using the pull portion 428.

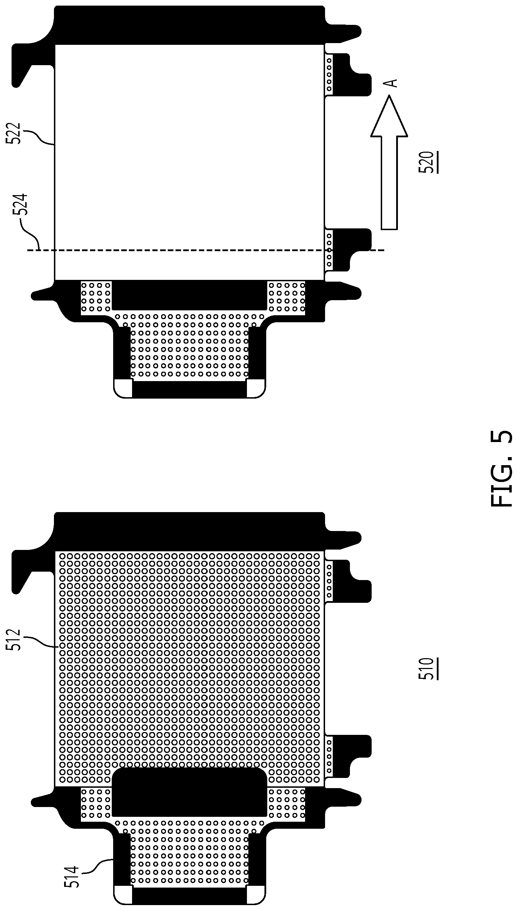

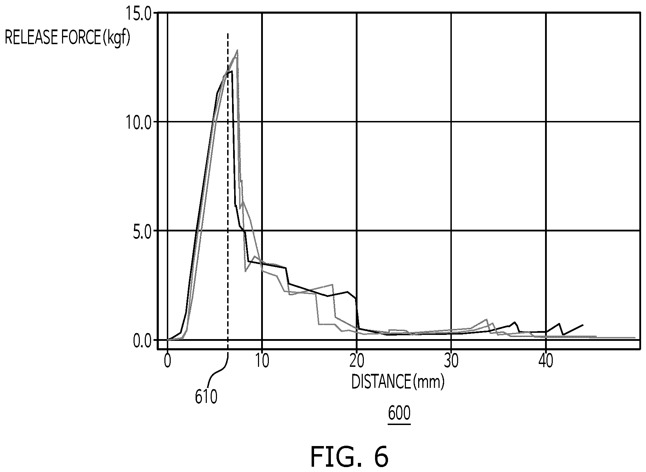

FIG. 5 is a plan view of a comparative battery tape according to the present disclosure. FIG. 6 is a graph illustrating test results on the release force of the comparative battery tape. Referring to FIG. 5, the comparative battery tape may be the same as the battery tape 100 shown in FIG. 1, except that in FIG. 1, the adhesive force of each of the 1_2th subregion 114 and 1_3th subregions 116 is the same as the adhesive force of the 1_1th subregion 112. In the comparative battery tape, the 1 _2th subregion 114 of the battery tape 100 shown in FIG. 1 may also be adhesive. In the description of FIGS. 5 and 6, a battery tape 510 may refer to the comparative battery tape for the sake of brevity. A battery 522 may be positioned over a first adhesive member 512 of the battery tape 510, and the first adhesive member 512 may be attached to the battery 522.

The battery tape 510 may be detached from the battery 522 to which the first adhesive member is attached by pulling a pull portion 514 from the battery 522. In response to pulling the pull portion 514 of the battery tape 510, the battery tape 510 and the battery 522 may be detached from each other. In the process of detaching the battery, the size of the attachment area of the first adhesive member 512 and the battery 52 may sequentially decrease in the second direction A.

The release force may refer to the force for pulling the pull portion 514 to detach the first adhesive member 512 from the battery 522. During the process of pulling the pull portion 514, the magnitude of the release force that occurs as the size of the attachment area of the first adhesive member 512 and the battery 522 decreases in the second direction A may be measured. A release force test may be performed by measuring the release force between the first adhesive member 512 and the battery 522. Referring to FIG. 6, a release force test graph 600 shows the magnitudes of the release force as a function of the distance traveled by the pull portion 514.

In the release force test graph 600, it can be seen that a strong force is required in the initial phase of pulling the pull portion 514. When the first adhesive member 512 is detached from the battery 522, a portion of the first adhesive member 512 may be detached from the battery 522, while the remaining portion of the first adhesive member 512 may be (or may remain) attached to the battery 522. At this time, a boundary may form between the detached portion of the first adhesive member 512 and the attached remaining portion of the first adhesive member 512. When the boundary in contact with the pull portion 514 on the first adhesive member 512 is set as a first boundary and the boundary of the first adhesive member 512 is set as a second boundary, the distance between the first boundary and the second boundary may be measured. The release force test graph 600 may represent the magnitude of the release force as a function of the distance between the first boundary and the second boundary. In this case, the battery tape 510 may be stretched in response to pulling the pull portion 514 due to the nature of the battery tape 510. As a result, the distance between the first boundary and the second boundary in the release force test graph 600 may be different from the length of the battery tape 510 that is not stretched.

In the release force test graph 600, a reference distance 610 may be a distance between the first boundary and the second boundary at which the magnitude of the release force is maximized. Referring to FIG. 6, it can be seen that in the release force test graph 600, the magnitude of the release force is maximized at the reference distance 610. The magnitude of the release force may decrease as the bonding area of the first adhesive member 512 and the battery 522 begins to decrease. Herein, the reference distance 610 may correspond to a region in contact with the 2_1th subregion on the first adhesive member 512. The reference region 524 may correspond to a region in contact with the 2_1th subregion on the first adhesive member 512, and reducing the adhesive force in the reference region 524 of the first adhesive member 512 may reduce the maximum of the release force. For example, due to the reference region 524, the 1_2th subregion 114 may be formed in the region of the battery tape 100 shown in FIG. 1 corresponding to the reference region 524, thereby reducing the maximum of the release force.

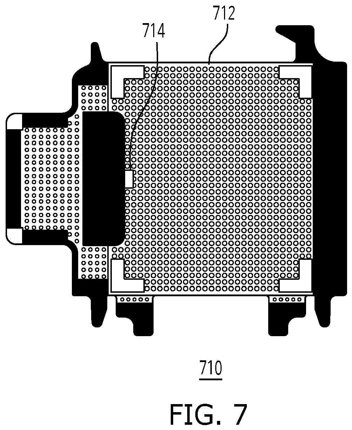

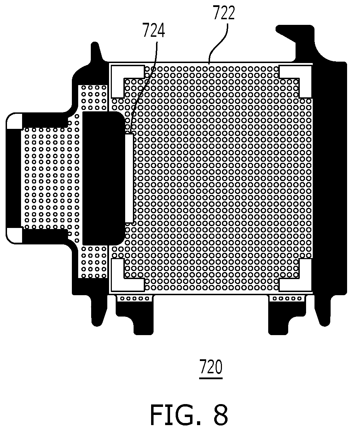

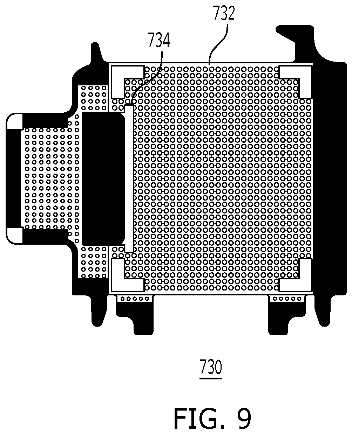

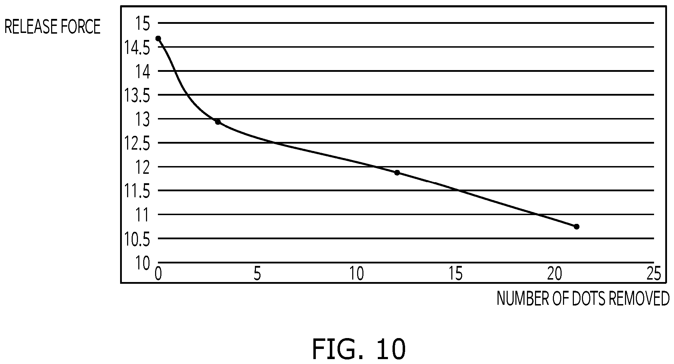

FIG. 7 is a plan view of a battery tape according to first example 710 of the present disclosure. FIG. 8 is a plan view of a battery tape according to second example 720 of the present disclosure. FIG. 9 is a plan view of a battery tape according to third example 730 of the present disclosure. FIG. 10 is a graph illustrating the release forces of the battery tapes according to the first to third examples 710 to 730. Each of the first to third examples 710 to 730 may be identical to the battery tape 100 shown in FIG. 1, except that the size of the 1_2th subregion is different from the size of the 1_2th subregion 114 of the battery tape 100 shown in FIG. 1. In another example, one of the first to third examples 710 to 730 may be identical to the battery tape 100 shown in FIG. 1.

In an embodiment, the center of the 1_2th subregion of each of the first to third examples 710 to 730 may coincide with the center of the 2_1th subregion in the first direction. In addition, the center of the 1_2th subregion may coincide with the center of the 1_1th subregion in the first direction.

Referring to FIGS. 7 to 9, in each of the first to third examples 710 to 730, up to 35 adhesive dots may be provided on the first adhesive member in the first direction. For example, in each of the first to third examples 710 to 730, in a region of the first adhesive member where neither the 1_2th subregion nor the 1_3th subregion is present in the first direction, 35 adhesive dots may be formed in the first direction. In another example, in each of the first to third examples 710 to 730, in a region of the first adhesive member where the 1_2th subregion or the 1_3th subregion is present in the first direction, fewer than 35 dots may be formed in the first direction.

In the first example 710, the 1_2th subregion 714 may be formed by removing three adhesive dots from a region of the first adhesive member 712 in contact with the 2_1th subregion. In the second example 720, the 1_2th subregion 724 may be formed by removing 13 adhesive dots from a region of the first adhesive member 722 in contact with the 2_1th subregion. In the third example 730, the 1_2th subregion 734 may be formed by removing 23 adhesive dots from a region of the first adhesive member 732 in contact with the 2_1th subregion.

The release force tests described with reference to FIGS. 5 and 6 may be performed for each of the first to third examples 710 to 730. The results of the release force tests are shown in Table 1 below.

**[Table 1]**

| | Release Force (kgf) of First Example | Release Force (kgf) of Second Example | Release Force (kgf) of Third Example |
|---|---|---|---|
| First Test | 13.7 | 12.2 | 9.9 |
| Second Test | 12.5 | 12.1 | 10.7 |
| Third Test | 12.6 | 11.4 | 11.7 |
| Average | 12.9 | 11.9 | 10.7 |
| Maximum | 13.7 | 12.2 | 11.7 |
| Minimum | 12.5 | 11.4 | 9.9 |

For each of the comparative example, the first example 710, the second example 720, and the third example 730, three release force tests were performed. Thereafter, average, maximum, and minimum values were calculated for the three release force tests. The measured values in Table 1 indicate the magnitudes of the release forces measured at the reference length and may be the maximum values of the release forces. The unit of the release forces is kgf.

Referring to FIG. 10, the test results for the comparative example (e.g., the comparative example 510 of the battery tape shown in FIG. 5), the first example 710, the second example 720, and the third example 730 may be used to determine the magnitudes of the release forces according to the number of adhesive dots removed. In the graph shown in FIG. 10, the average values of the three release force tests for the first example 710, the second example 720, and the third example 730 are used. A release force of about 14.7 kgf may be measured in the comparative example in which the number of removed adhesive dots is 0, a release force of about 12.9 kgf may be measured in the first example 710 in which the number of removed adhesive dots is 3, a release force of about 11.9 kgf may be measured in the second example 720 in which the number of removed adhesive dots is 13, and a release force of about 10.9 kgf may be measured in the third example 730 in which the number of removed adhesive dots is 23. In addition, in the graph shown in FIG. 10, a line connecting data for the respective comparative example, first example 710, second example 720, and third example 730 is shown. Accordingly, as can be seen, as the number of removed adhesive dots increases (e.g., as the number of adhesive dots decreases), the size of the 1_2th subregion without adhesive force increases, and as the size of the 1_2th subregion increases, the magnitude of the release force decreases.

A lower release force may weaken the bond between the first adhesive member and the battery, and the first adhesive member and the battery may be easily detached from each other. Accordingly, the magnitude of the release force is desirably at least a reference (or predetermined) amount. In an embodiment, the length of the 1_2th subregion may be shorter than the length of the 2_1th subregion in the first direction. For example, the number of removed adhesive dots may be equal to or smaller than a reference (or predetermined) number, and the length of the 1_2th subregion may be shorter than the length of the 2_1th subregion. With this configuration, the release force may be greater than or equal to a reference (or predetermined) magnitude.

With the configuration described above, the increase of the release force between the first adhesive member and the battery may be improved. In addition, adjusting the length of the 1_2th subregion may cause the release force between the first adhesive member and the battery to have a suitable strength.

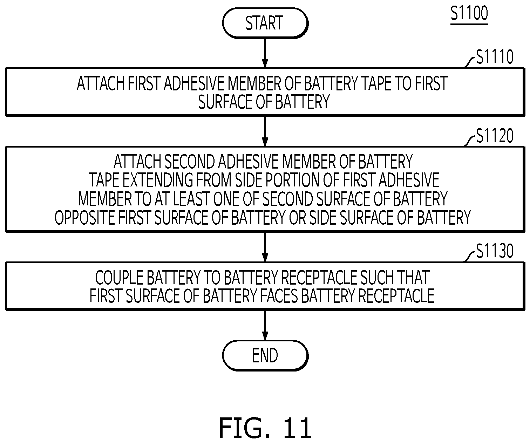

FIG. 11 is a flowchart describing a battery tape attachment method according to embodiments of the present disclosure. In an embodiment, a method of applying a battery tape S1100 may include attaching a first adhesive member of a battery tape to a first surface of a battery (S1110). The first adhesive member may be wider than the area of the first surface of the battery. The first adhesive member may include a 1_1th subregion and a 1_2th subregion having a lower adhesive force than the 1_1th subregion, and the 1_2th subregion may be positioned in a region in contact with the second adhesive member. The adhesive force of the 1_2th subregion may be removed.

In an embodiment, the length of the 1_2th subregion may be shorter than the length of the 2_1th subregion in the first direction. Furthermore, the center of the 1_2th subregion may coincide with the center of the 2_1th subregion along the first direction. In addition, the 2_1th subregion may have a width in the second direction perpendicular to the first direction, and the width of the 1_2th subregion may be smaller than the width of the 2_1th subregion. The release force between the first adhesive member and the battery may decrease proportionally to the size of the 1_2th subregion.

In an embodiment, the first adhesive member may include 1_3th subregions, which are positioned at corners of the first adhesive member and from which adhesive force is removed. The 1_3th subregions may be positioned at the corners of the first adhesive member, respectively. The 1_3th subregions may be "L" shaped.

In an embodiment, the second adhesive member included in the battery tape and extending from a side portion of the first adhesive member may be attached to at least one of a second surface of the battery opposite the first surface of the battery or a side surface of the battery (S1120).

In an embodiment, the second adhesive member includes a 2_1th subregion that may be positioned in a region in contact with the first adhesive member and extends in the first direction. In addition, the length of the 2_1th subregion may be shorter than the length of the first adhesive member in the first direction. The adhesive force of the 2_1th subregion may be greater than the adhesive force of the 1_1 th subregion.

In an embodiment, the second adhesive member may further include 2_2th subregions, and the 2_2th subregions may be attached to at least one of the second surface of the battery opposite the first surface or the side surface of the battery.

In an embodiment, the second adhesive member may include a pull portion, for example, at least a portion of the second adhesive member extending in the second direction. At least a portion of the pull portion may be adhesive, and the pull portion may be attached to at least one of the second surface of the battery opposite the first surface or the side surface of the battery. In addition, the pull portion may include 2_3th subregions on portions thereof from which adhesive force is removed.

In an embodiment, the second adhesive member may include a folding portion extending in a first direction, and the folding portion may allow the pull portion to be folded with respect to the side surface of the battery. The first direction may be perpendicular to the second direction.

In an embodiment, the battery may be coupled to the battery receptacle such that the first surface of the battery faces the battery receptacle (S1130). In response to pulling the pull portion, the battery may be decoupled from the battery receptacle.

The flowchart in FIG. 11 and the above description are only illustrative of embodiments of the present disclosure, and the scope of the present disclosure is not limited to the flowchart in FIG. 11 and the above-described embodiments. For example, one or more of the steps in the flowchart and the above description may be added/altered/deleted, the order of one or more of the steps may be changed, and one or more of the steps may be performed concurrently (or simultaneously).

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

## Claims

1. A battery tape (100) comprising:
a first adhesive member (110) configured to be attached to at least a portion of a first surface of a battery *200); and
a second adhesive member extending from a side portion of the first adhesive member and configured to be attached to at least another portion of the battery (200),
wherein the first adhesive member has a 1_1th subregion (112) and a 1_2th subregion (114) having a lower adhesive force than the 1_1th subregion (112), and
wherein the 1_2th subregion (114) is positioned in a region in contact with the second adhesive member.

2. The battery tape (100) as claimed in claim 1, wherein the 1_2th subregion (114) is not adhesive.

3. The battery tape (100) as claimed in claim 1 or claim 2, wherein the second adhesive member (120) has a 2_1th subregion (122), and
wherein the 2_1th subregion (122) is positioned in a region in contact with the first adhesive member and extending in a first direction.

4. The battery tape (100) as claimed in claim 3, wherein the 2_1th subregion (122) has a shorter length than the first adhesive member in the first direction.

5. The battery tape (100 as claimed in claim 3 or claim 4, wherein the 1_2th subregion (114) has a shorter length than the 2_1th subregion (122) in the first direction.

6. The battery tape (100) as claimed in any one of claims 3 to 5, wherein a center of the 1_2th subregion (114) coincides with a center of the 2_1th subregion (122) in the first direction.

7. The battery tape (100) as claimed in any one of claims 3 to 6, wherein the 2_1th subregion (122) has a width in a second direction perpendicular to the first direction, and
wherein the 1_2th subregion (114) has a smaller width than the 2_1th subregion (12)2.

8. The battery tape (100) as claimed in any one of claims 3 to 7, wherein the 2_1th subregion (122) has a higher adhesive force than the 1_1th subregion (112).

9. The battery tape (100) as claimed in any one of the preceding claims, wherein the first adhesive member (110) has a non-adhesive 1_3th subregion (116) positioned at a corner of the first adhesive member (110).

10. The battery tape (100) as claimed in claim 9, wherein the first adhesive member (110) has a plurality of corners, and
wherein the 1_3th subregion (116) has a plurality of 1_3th subregions (116) positioned at the corners, respectively.

11. The battery tape (100 as claimed in claim 9 or claim 10, wherein the 1_3th subregion (116) is "L" shaped.

12. The battery tape (100) as claimed in any one of the preceding claims, wherein the second adhesive member (120) has a 2_2th subregion (126), and
wherein the 2_2th subregion (126) is configured to be attached to at least one of a second surface of the battery (200) opposite the first surface of the battery (200) or a side surface of the battery (200).

13. The battery tape (100) as claimed in any one of the preceding claims, wherein the second adhesive member comprises a pull portion extending in a second direction.

14. The battery tape (100) as claimed in claim 13, wherein at least a portion of the pull portion (124) is adhesive, and
wherein the pull portion (124) is configured to be attached to at least one of a second surface of the battery (200) opposite the first surface of the battery (200) or a side surface of the battery (200).

15. The battery tape (100) as claimed in claim 13 or claim 14, wherein the pull portion (124) has a 2_3th subregion (128) on a portion thereof from which adhesive force is removed.
